# EUROPEAN PATENT SPECIFICATION

(11) **EP 1 366 290 B1**
(45) Date of publication and mention of the grant of the patent: **15.08.2007**
(21) Application number: 02702794.5
(22) Date of filing: 07.03.2002
(51) Int. Cl.: F03D 11/04

(54) **OFFSHORE FLOATING WIND POWER GENERATION PLANT**
SCHWIMMENDE OFFSHORE-WINDKRAFTANLAGE
INSTALLATION FLOTTANTE EN MER DE PRODUCTION D'ENERGIE EOLIENNE

(30) Priority: 08.03.2001 JP 2001064754
(43) Date of publication of application: 03.12.2003
(73) Proprietor: Ishikawajima-Harima Jukogyo Kabushiki Kaisha, Tokyo 100-8182 (JP)
(72) Inventor: SHIGEMITSU, Hirofumi, Yokohama-shi, Kanagawa 230-0078 (JP); YANAGISAWA, Takahiro, Yokohama-shi, Kanagawa 240-0001 (JP); TOBINAGA, Ikuo, Yokohama-shi, Kanagawa 235-0022 (JP)
(74) Representative: Jennings, Nigel Robin
(86) International application number: PCT/JP2002/002117
(87) International publication number: WO 2002/073032

(56) References cited:
- EP-A- 1 106 825
- DE-A- 3 224 976
- DE-A- 19 727 330
- DE-A- 19 846 796
- DE-U- 20 109 480
- DE-U- 29 908 897
- NL-C- 1 008 318
- US-A- 6 100 600
- US-B1- 6 294 844

## Description

### TECHNICAL FIELD

The present invention relates to an offshore floating wind power generation plant, more specifically, to an offshore floating wind power generation plant which can be stably installed offshore and which allows a plurality of wind power generation units to be rationally disposed thereon, each of the units being able to stably generate electricity with high efficiency.

### BACKGROUND ART

Wind power generation plants are attracting much attention as one of eco-friendly applied technologies utilizing natural energy and some of them have already come into practical use and been in operation. It is expected that such plants will be more widely utilized in future.

Various offshore wind power generation plants have been proposed since wind power generation plants installed offshore will receive the wind greater and more stable in speed than those installed on land and can be expected to generate electricity with higher efficiency (see e.g. DE-A- 32 24 976).

For example, JP 2000-213451A discloses a wind power generation system in which a tower and a hollow base block are prefabricated in a factory. The base block is installed on a sea floor and is immobilized by a weight therein. Disposed on and fixed to the base block via a connector is the tower on which a wind power generator is installed. Such wind power generation system may be built up offshore or the like in a short period with no adverse affects on the environment, thereby generating electricity.

Further, JP 2000-272581A discloses a wind power generation plant on the water in which a wind power generator in the form of a propeller type windmill is disposed via a column on a structure which is floated on the water by a plurality of floats arranged equidistantly around a periphery of the structure, thereby generating electricity on the structure. When an amount of electricity to be generated is to be increased, a plurality of structures as described above are laterally connected together via connection rods.

Further, JP 11-336653A discloses a wind power generation system movable on the water in which a frame structure is floated on the sea to prevent any damage by collision or the like and to enhance durability. Floated within and along the frame structure are a plurality of vessels for mounting windmills thereon which are connected to the frame structure. A number of windmills are arranged on each of the vessels and along a circular or polygon line via mounting columns. The vessels connected to the frame structure are connected together via connection rods. The frame structure, which is movable on the sea by propelling means comprising an engine, a screw and a rudder provided on each of the vessels, can utilize through its movement huge and enormous wind energy produced by typhoon or the like. The respective windmills are always directed properly against the wind by automatic directional adjustment and automatic rotational-speed adjustment in response to any variation of wind speed, thereby generating electricity at optimum rotational speed.

The above-mentioned wind power generation system disclosed in JP 2000-213451A, which has the wind power generator on the tower fixed to the base block on the sea floor, may provide more stable installation of the wind power generator in comparison with that of the type floating on the water; however, the installation may become difficult in the case of the sea floor being soft. Moreover, the more the depth of water increases, the more the tower to be installed is enlarged in size and the installation cost is increased, resulting in extensive limitation with respect to sea areas where the tower can be installed. Therefore, it is unpractical to install such wind power generation system on the ocean with greater depth. Especially when a plurality of towers are to be installed so as to increase an amount of electricity to be generated, there arises a problem of the cost being further increased.

On the other hand, the sea floor may be soft even if the depth of water is seemingly shallow, which makes it instable to dispose the wind power generator on the tower. Then, in order to secure stability of the wind power generator, a larger-scaled support mechanism must be provided by, for example, extending legs of the tower into a layer of hard base rock under the soft sea floor, resulting in increase in the installation cost.

The wind power generation system on the water disclosed in JP 2000-272581A, which has the single wind power generator disposed on the structure floated on the water by the floats arranged equidistantly around the periphery of the structure, tends to be affected by wave motions offshore. In order to suppress a tilting angle, an accelerated velocity and the like of the structure within allowable ranges for the generator, the scale of the structure and floats needs to be enlarged, resulting in increase in the cost. Furthermore, when a plurality of structures are connected together via connection rods so as to increase an amount of electricity to be generated, all the windmills may be once directed properly against the wind; however, the respective windmills are not always kept to be directed optimally against the wind in response to any change of the direction of the wind. A wind power generator on a windword or front side may be overlapped with a wind power generator on a leeward or rear side in the direction of the wind; in this case, the downwind power generator may be affected by any turbulence due to the upwind power generator, resulting in reduction of the efficiency in generating electricity. Then, in order to minimize any interference of turbulence, distances between the wind power generators need to be increased, resulting in enlargement of the assembly of such structures.

The wind power generation system movable on the water disclosed in JP 11-336653A, which has the windmills arranged together via the columns along the circular or polygon line on each of the vessels within the frame structure, each of the vessels having automatic directional adjustment and automatic rotational-speed adjustment in response to change of wind speed, may direct all the windmills properly against the wind even in change of the direction of the wind; however, because of the windmills being arranged together along the circular or polygon line, all the windmills cannot receive the wind in optimum condition. More specifically, a wind power generator on a windward or front side may in alignment, in the direction of wind, with a wind power generator on a leeward or rear side, which causes the upwind wind power generator to be affected by any turbulence due to the downwind power generator, resulting in reduction of the efficiency in generating electricity. Then, in order to prevent any interference of turbulence, distances between the windmills need to be increased with a disadvantageous result that the system becomes large-sized.

The invention was made in view of the above-described problems encountered in the conventional technologies and provides an offshore floating wind power generation plant in which a float is moored to a single point mooring system so as to always keep the float in a constant orientation to the wind, the float being of a shape which allows effective arrangement of the wind power generation units thereon so as to achieve higher efficiency in generating electricity by the wind power generation units, the float being stable in waves, the float being easily expandable to change an amount of electricity to be generated through increase in number of the wind power generation units mounted on the float.

### DISCLOSURE OF THE INVENTION

In order to solve the above-mentioned problems, the inventors made extensive studies and researches to find out that, in a conventional offshore wind power generation system or plant, its stability offshore may be attained, for example, by installing a wind power generator on a structure floated on the water by a plurality of floats arranged along a periphery of the structure or by installing windmills along a circular or polygon line on each of vessels for mounting the windmills thereon and that, in a case of a plurality of power generators being provided so as to increase an amount of electricity to be generated, the windmills may be once directed properly against a certain wind direction; however, such arrangement of the windmills may not be necessarily optimum when the wind direction changes. The inventors variously investigated means or measures for solving the problem and completed the invention.

An object of the invention is to moor a float to a single point mooring system such that the float is always directed at a constant orientation to the wind, whereby a plurality of wind power generating units on the float are always kept at a constant orientation to the wind.

A further object of the invention is to provide a float of a shape which allows rational arrangement of power generating units thereon, thereby attaining compact in size of the float and high efficiency in generating electricity by the respective wind power generation units.

A still further object of the invention is to enhance stability of a float in waves.

A still further object of the invention is to make a float readily expandable to change an amount of electricity to be generated through increase in number of the wind power generation units mounted on the float.

A still further object of the invention is to provide arrangement of wind power generation units so as not to cause any mutual interference of turbulences due to wind power generation units.

### BRIEF DESCRIPTION OF THE DRAWINGS

Fig. 1 is a schematic plan view of an offshore floating wind power generation plant according to an embodiment of the invention and shows a fundamental structure with three wind power generation units;
Fig. 2 is a schematic front view of the wind power generation plant shown in Fig. 1 looking from a windward side;
Fig. 3 is a schematic plan view of a modification of the embodiment shown in Fig. 1;
Fig. 4 is an enlarged side view showing an embodiment of a single point mooring system;
Fig. 5 is a side view of a further embodiment of the single point mooring system;
Fig. 6 is a side view of a still further embodiment of the single point mooring system;
Fig. 7 is a schematic plan view of an offshore floating wind power generation plant according to a further embodiment of the invention in which a float is laterally expanded to have five wind power generation units thereon;
Fig. 8 is a schematic front view of the wind power generation plant shown in Fig. 7 looking from the windward side;
Fig. 9 is a schematic plan view of an offshore floating wind power generation plant according to a still further embodiment of the invention in which a floating structure is laterally expanded to have seven wind power generation units thereon;
Fig. 10 is a schematic plan view of a modification of the embodiment shown in Fig. 7 having connection members in the form of trusses;
Fig. 11 is a schematic plan view of a further embodiment with addition of a wind power generation unit to the embodiment shown in Fig. 1;
Fig. 12 is a side view of the wind power generation plant shown in Fig. 11;
Fig. 13 is a schematic plan view of an offshore floating wind power generation plant according to a still further embodiment of the invention in which a floating structure is expanded laterally and longitudinally to have thirteen wind power generation units thereon; and
Fig. 14 is a side view of the wind power generation plant shown in Fig. 13.

### BEST MODE FOR CARRYING OUT THE INVENTION

Embodiments of the invention will be disclosed in detail below with reference to the drawings.

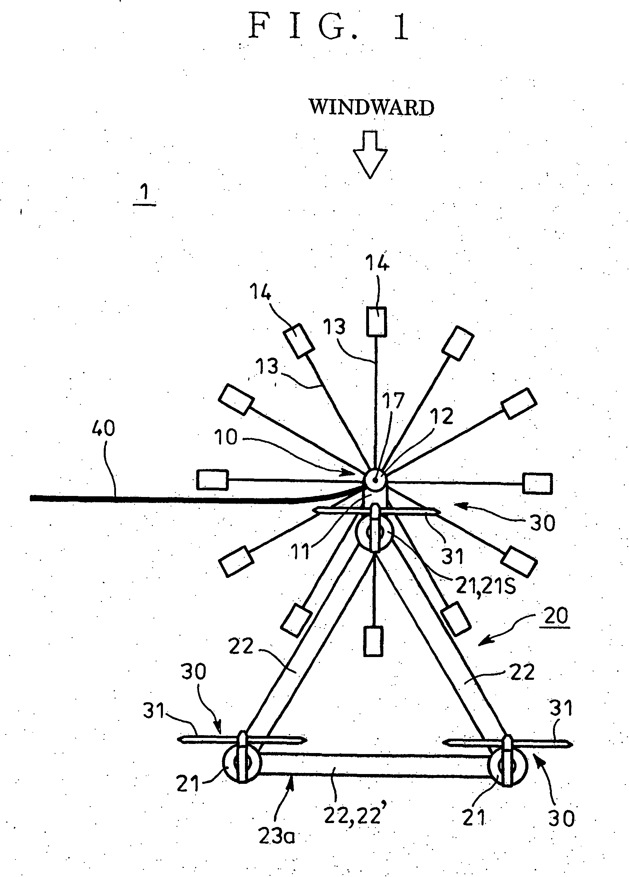

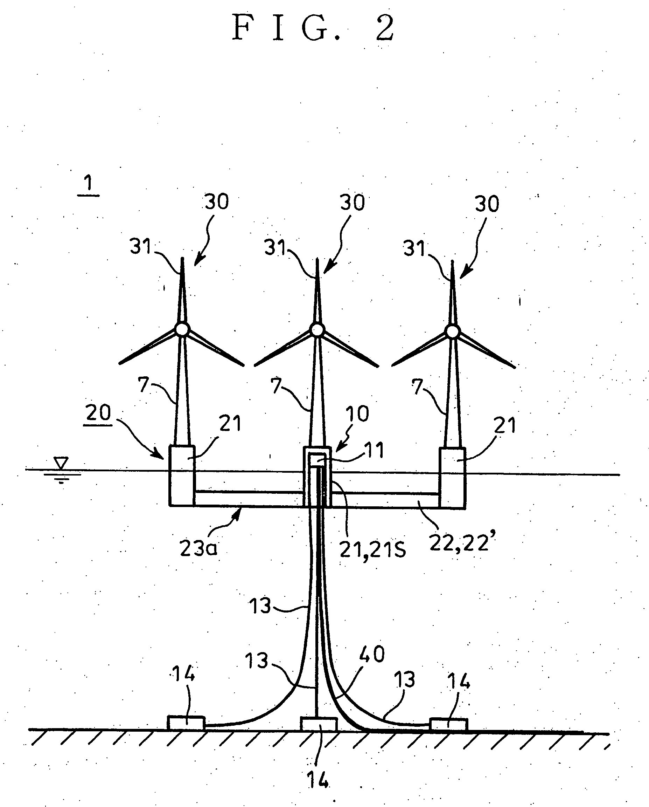

Figs. 1 and 2 show an offshore floating wind power generation plant according to an embodiment of the invention as a fundamental structure having three wind power generation units thereon. Figs. 1 and 2 are schematic plan and front views, respectively.

The offshore floating wind power generation plant 1 comprises a single point mooring system 10 anchored to an offshore sea floor, a float 20 moored to the mooring system 10 and directed in a constant orientation to the wind and wind power generation units 30 mounted on the float 20 such that any turbulences due to the wind power generation units never interfere with each other.

The float 20 constituting the offshore floating wind power generation plant 1 is semi-submersible to reduce its sectional area crossing the surface of water, thereby suppressing any fluctuation of the float due to wave motions. The float 20 comprises vertical hollow column members 21 crossing and positioned above and below the surface of water and hollow connection members 22 which connect the column members 21 together below the surface of water.

Such float 20 comprising the column and connection members 21 and 22 is basically constructed to provide a triangle 23a by assembling three column members 21 and three connection members 22 together. Fig. 1 shows a case where the connection members 22 of equal length are assembled to provide an equilateral triangle; alternatively, an isosceles or other triangle may be provided.

The column members 21 may be hollow and circular in cross section; alternatively, they may be hollow and, for example, rectangular or polygonal in cross section for easiness in fabrication. The connection members 22 may be hollow pipes with, for example, circular or rectangular cross section. Each of the column and connection members 21 and 22 may be reinforced as necessary by providing a reinforcing rib or the like therein.

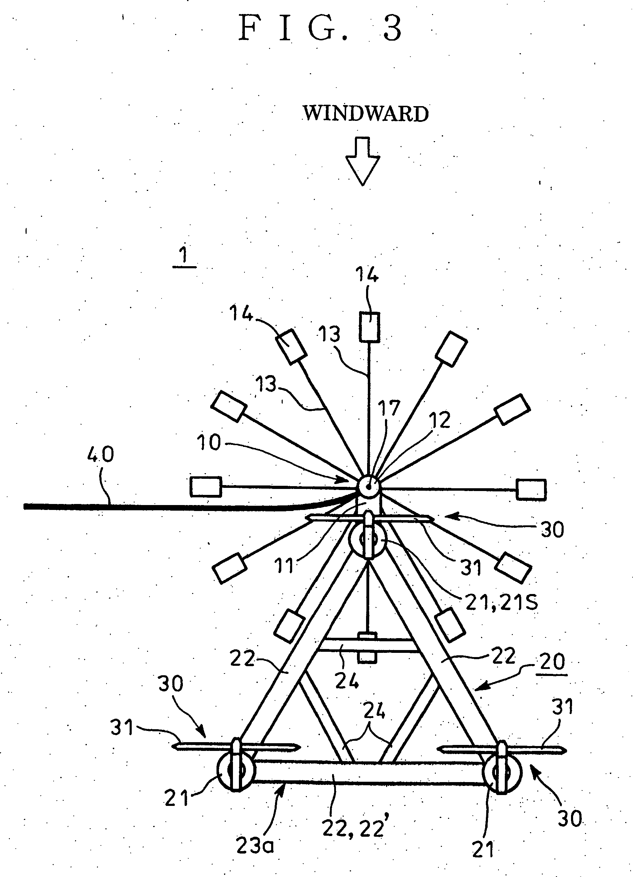

The float 20 may be further reinforced by providing, as shown in Fig. 3, reinforcing members 24 within the triangle 23a of the float 20 which connect the connection members 22 together.

Mounted on each of the above-mentioned three column members 21 is a wind power generation unit 30 comprising a windmill 31 mounted on a mast 7 and directed properly against the wind by a known directional adjustment mechanism.

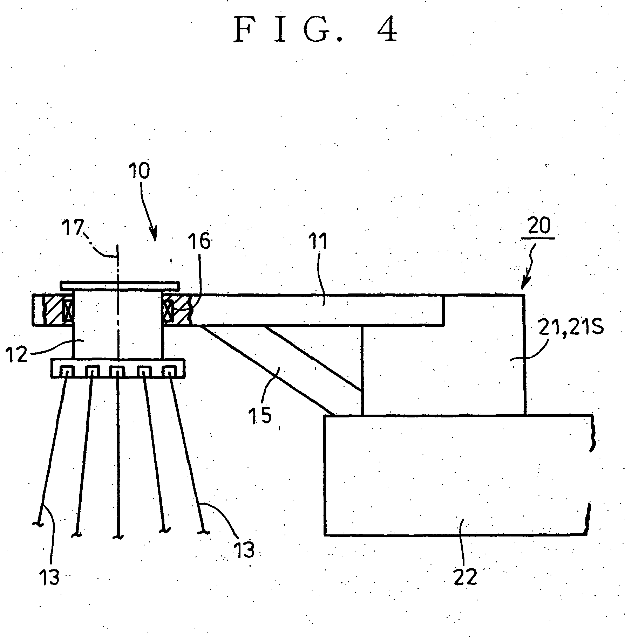

The float 20 is moored to the single point mooring system 10 floated offshore and anchored to the sea floor. As the mooring system 10, a conventional mooring unit for locking an offshore structure in position may be employed such as a turret mooring unit as shown in Fig. 4; a turret 12 in the form of a turntable is mounted on a yoke 11 projected outwardly from a column member 21S at an apex of the triangle 23a of the float 20 and is anchored to the sea floor by a plurality of mooring chains 13 and anchors 14 (see Figs. 1-3), thereby providing offshore mooring of the float 20.

More specifically, the yoke 11 is projected forward and horizontally by integrally connecting the same to the column member 21S at the apex of the triangle 23a of the float 20 and is reinforced by a reinforcing arm 15. The yoke 11 is connected via a bearing 16 to the turret 12 such that the float 20 is horizontally rotatable about a mooring point 17 of the turret 12. In this case, a submarine cable 40 is connected via the turret 12 to the float 20.

The single point mooring system 10 is required to merely support a load to the extent that the float 20 is prevented from drifting. Therefore, even if the sea floor may be soft, the offshore floating wind power generation plant 1 can be stably moored in position through the simply constructed single point mooring system 10.

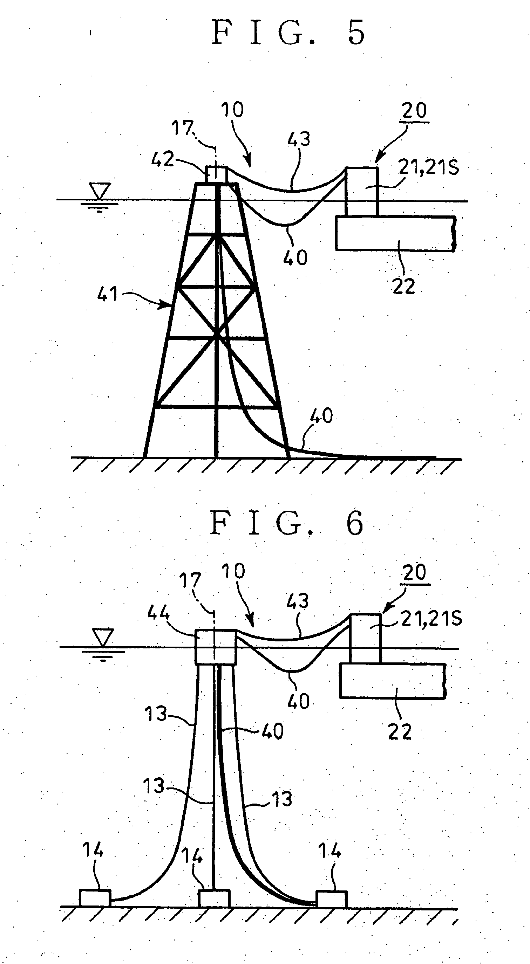

Thus, the single point mooring system 10 may be in the form of a tower 41 with a simple structure and installed on the sea floor as shown in Fig. 5, the float 20 being moored via a single mooring line 43 to a rotor 42 on the tower 41. Alternatively, as shown in Fig. 6, a buoy 44 may be anchored to the sea floor via a plurality of chains 13 and anchors 14, the float 20 being moored via a single mooring line 43 to the buoy 44. Anyway, different types of single point mooring systems may be employed, providing that the float 20 can be moored to the single mooring point 17. In the cases of Figs. 5 and 6, the submarine cable 40 is connected to the float 20 via either the rotor 42 on the tower 41 or the buoy 44.

The float 20, which has the column member 21S at the apex of the triangle 23a and moored to the single mooring system 10, is horizontally rotatable about the mooring point 17 on the surface of the sea in accordance with the wind direction. The float 20 is stabilized as shown in Fig. 1 such that, against the wind from the windward side, the left and right connection members 22 are positioned bilaterally symmetrically with respect to the mooring point 17 and loads imposed onto the float 20 on the left and right sides are balanced. The three wind power generation units 30 are laterally equidistant as shown in Fig. 2 when viewed from the front or windward side. The dimension of the triangle 23a is predetermined such that the wind power generation units 30 are spaced from one another so as not to cause any mutual interference of turbulences due to the windmills 31.

In Fig. 1, loads of the wind from a windward side imposed on the respective windmills 31 of the wind power generation units 30 cause the windmills 31 to be respectively directed properly against the wind by the automatic directional adjustment mechanism. On the other hand, the float 20, which has the column member 21S at the apex of the triangle 23a moored to the single point mooring system 10, turns about the mooring point 17 in accordance with the wind direction such that the loads imposed on the float 20 on the left and right sides are balanced; the balanced orientation is maintained even is the wind direction changes. In Fig. 1, the float 20 is made bilaterally symmetrical with respect to the mooring point 17 against the wind while the connection member 22' at the base of the triangle 23a is made perpendicular to the wind direction, which always keeps maximum the lateral distances between the wind power generation units 30 with respect to the wind direction.

With a known float fixed to a predetermined direction through mooring and on which a plurality of windmills are arranged, distances between the windmills in the directions perpendicular to and in parallel with the wind direction are required to be approximately three and ten times as long as a diameter D of the windmills, respectively, in view of change in the wind direction. On the other hand, the above-described offshore floating wind power generation plant 1, which has the windmills 31 with their relative positions unchanged with respect to the wind direction even when the wind direction changes and which is rationally constructed to arrange the windmills 31 at the apexes of the triangle 23a designed to a size of not causing any interference of turbulences due to the windmills 31, may have the distances between the windmills 31 shortened to two times as long as the diameter D of the windmill. This not only allows the float 20 to become compact in size but also prevents any mutual interference of turbulences due to the windmills 31 so that a maximum efficiency can be always attained in generating electricity.

The float 20, which has the triangle 23a as a fundamental shape and is semi-submersible, is hardly affected by external forces such as wind force, tidal power and wave motions and can be stable offshore. Therefore, efficient wind power generation can be attained offshore where strong wind force is available.

The float 20 changes its direction with a time lag in response to change of the wind direction; moreover, a directional relationship between the float 20 and the wind may not be always kept constant because of effects by tidal power, wave motions, etc. other than the wind force, which will not, however, lead to reduction of efficiency in generating electricity by the wind power generation units 30 since the windmills 31 are instantly directed properly against the wind by the automatic directional adjustment mechanisms.

Electric power generated by the respective wind power generation units 30 is transmitted to land, etc., via the submarine cable 40 connected to the single point mooring system 10.

In the offshore floating wind power generation plant 1 constructed as described above, assuming that the diameter of the windmills 31 is, say 80 m, then the distance between centers of the two column members 21 connected together via the connection member 22 of the float 20 may be 160 m; and, a diameter of each of the column members 21 and a height of the mast 7 of the wind power generation unit 30 thereon may be, for example, 15 and 60 m, respectively.

With such offshore floating wind power generation plant 1, the float 20 can be moored to the simply structured single point mooring system 10 even on sea areas with deep water depth and with severe wave conditions, so that drastic expansion in range of installable sea areas can be attained in comparison with a case where a wind power generator is disposed on a tower fixed to a sea floor.

The float 20, which has the wind power generation units 30 disposed at the apexes of the triangle 23a, allows rational arrangement of the wind power generation units 30 thereon to enhance compactness in size of the float 20 and can readily cope with change of an amount of electricity to be generated through increase in number of the wind generation units 30 thereon.

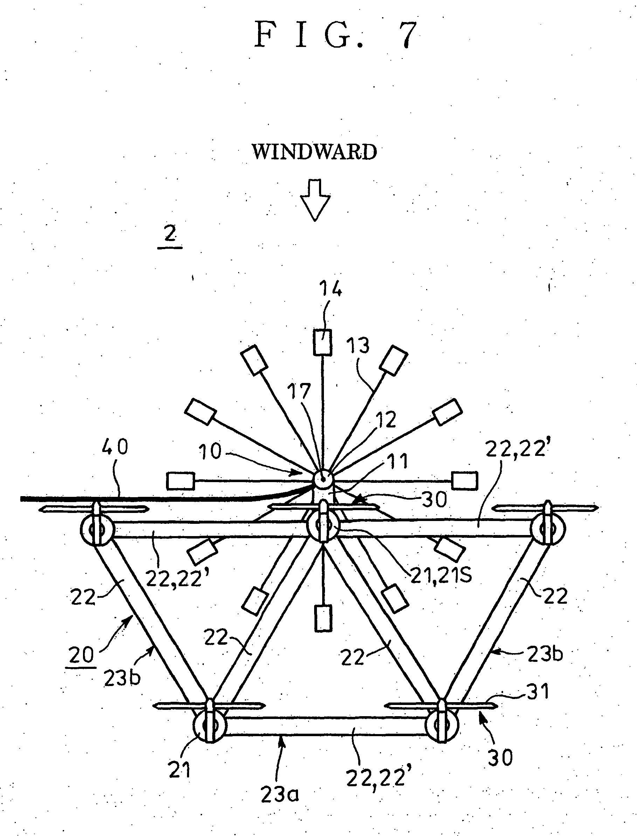

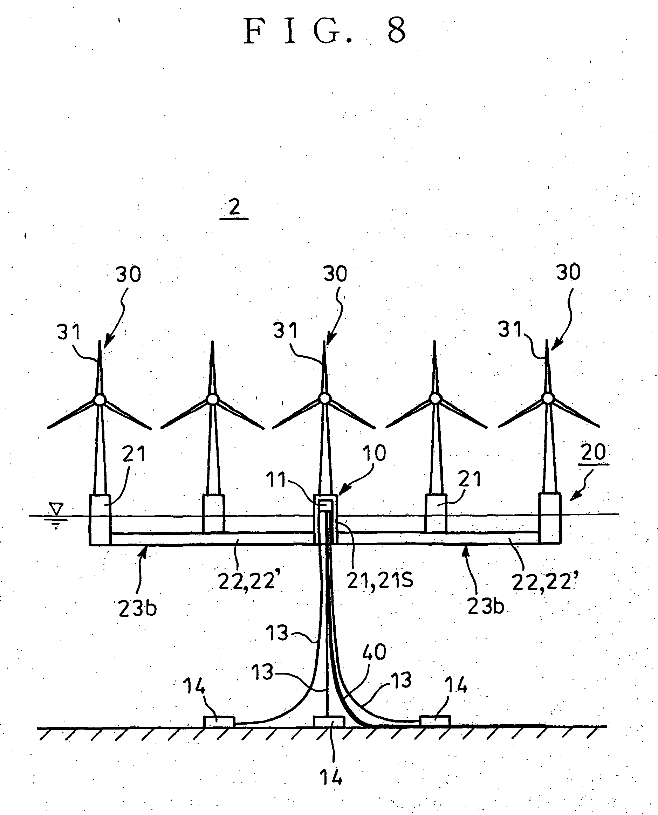

Figs. 7 and 8 show an offshore floating wind power generation plant according to a further embodiment of the invention with the float 20 being laterally expanded for arrangement of five wind power generation units thereon, Figs. 7 and 8 being schematic plan and front views, respectively. Illustrated in this offshore floating wind power generation plant 2 is a case where the fundamental structure of the float 20 in the form of a single triangle 23a as shown in Fig. 1 is laterally expanded.

More specifically, assembled on opposite sides of the single triangle 23a are reversed triangles 23b each comprising a column member 21 and two connection members 22, the connection members 22' at bases of the triangles 23a and 23b being in parallel with each other. Mounted on each of the five column members 21 is a wind power generation units 30. Also in this case, Fig. 7 shows the triangles 23a and 23b being equilateral triangles; however, the triangles may be isosceles or other triangles by, for example, making the connection members 22' as the bases of the triangles 23a and 23b different in length from the other connection member 22.

Also in the offshore floating wind power generation plant 2 shown in Fig. 7, the float 20 laterally expanded to have five wind power generation units 30 thereon is bilaterally symmetrical with respect to the mooring point 17 so that the float 20 is stabilized against the wind flowing from a windward side as shown in Fig.7 with loads imposed on the float 20 on the left and right sides being balanced. The five wind power generation units 30 are laterally equidistant as shown in Fig. 8 when viewed from the front or windward side. The dimension of the triangles 23a and 23b is predetermined such that the wind power generation units 30 are spaced from one another so as not to cause any mutual interference of turbulences due to the windmills 31; for instance, such spacing may be predetermined to be two times as long as the diameter D of the windmills 31.

In comparison with the case of Fig. 1, the offshore floating wind power generation plant 2 shown in Fig. 7 is capable of generating larger amount of electricity; in addition, it has an effect of being further stabilized against lateral wave movements since the float 20 is laterally expanded.

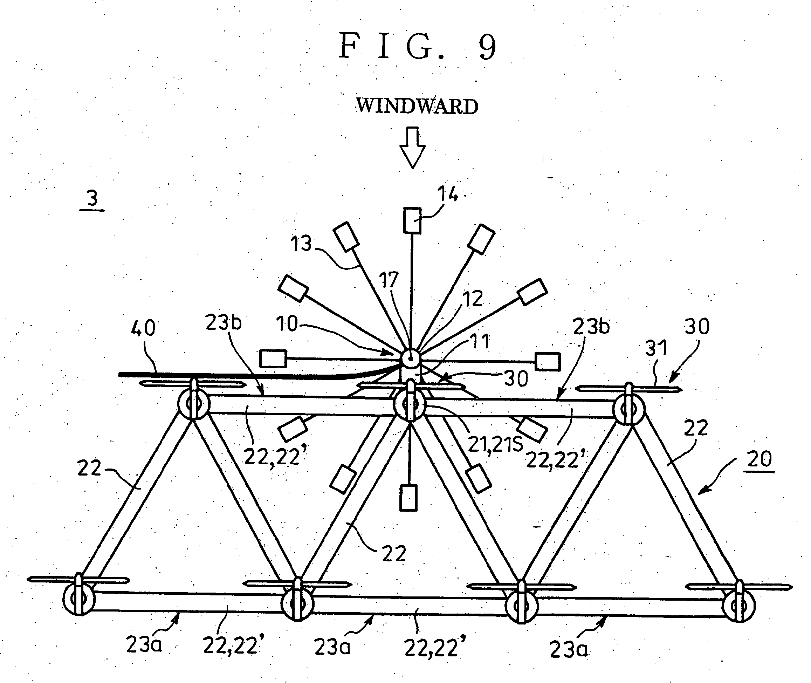

Fig. 9 shows an offshore floating wind power generation plant in accordance with the invention in which the float 20 shown in Fig. 7 is further laterally expanded for addition of two further wind power generation units 30 to totally have the seven wind power generation units 30 thereon. Added laterally oppositely and outwardly of the reversed triangles 23b shown in Fig. 7 are two triangles 23a each comprising a column member 21 and two connection members 22.

In this manner, the number of the wind power generation units 30 on the float may be readily increased by expansively assembling reversed triangles 23b and triangles 23a in an alternate manner laterally oppositely and outwardly of the core triangle 23a with its single column member 21S being moored to the mooring point, which makes it possible to readily cope with any need for an increased amount of electricity to be generated.

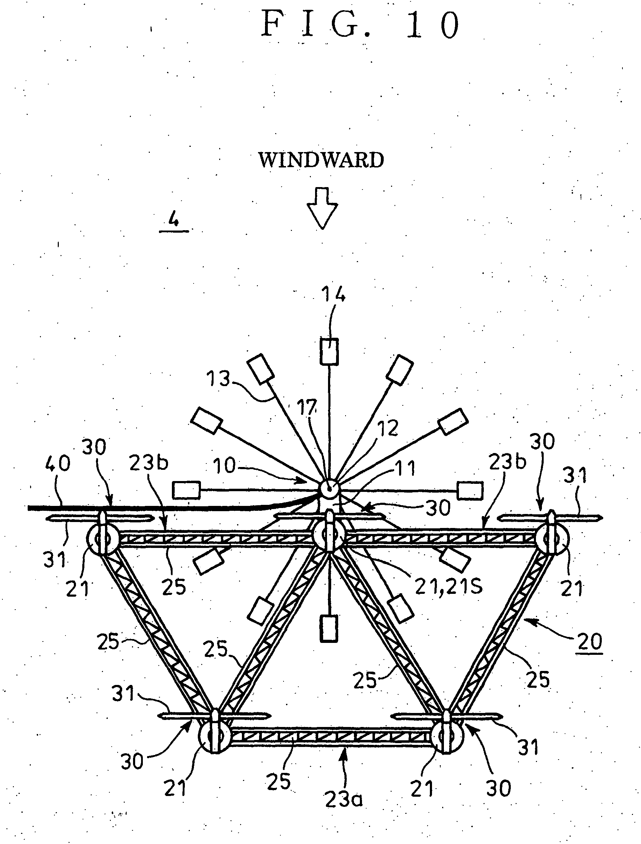

Fig. 10 shows a further embodiment of an offshore floating wind power generation plant in accordance with the invention. This offshore floating wind power generation plant 4 is different from those described above in construction of the float 20 such that connection members 25 for connecting the column members 21 together are in the form of trusses so as to attain weight saving in comparison with the above-mentioned connection members 22 in the form of hollow pipes. Fig. 10 illustrates a case where the float 20 shown in Fig. 7 is composed by the connection members 25 in the form of trusses; of course, this may also applicable to any of the floats 20 in Figs. 1, 3 and 9.

Even in use of the float 20 with such connection members 25 in the form of the trusses for connecting the column members 21 together, obtained are effects and advantages similar to those already described with respect to the offshore floating wind power generation plants 1, 2 and 3.

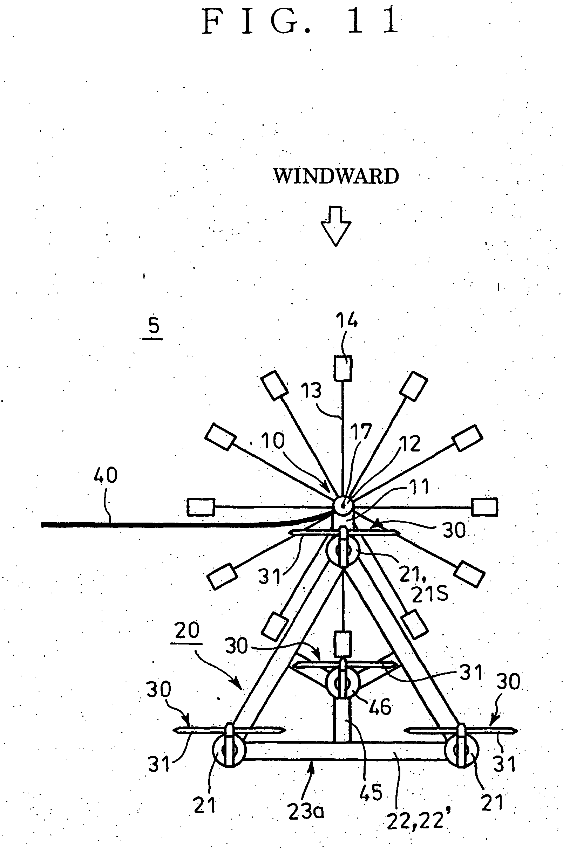

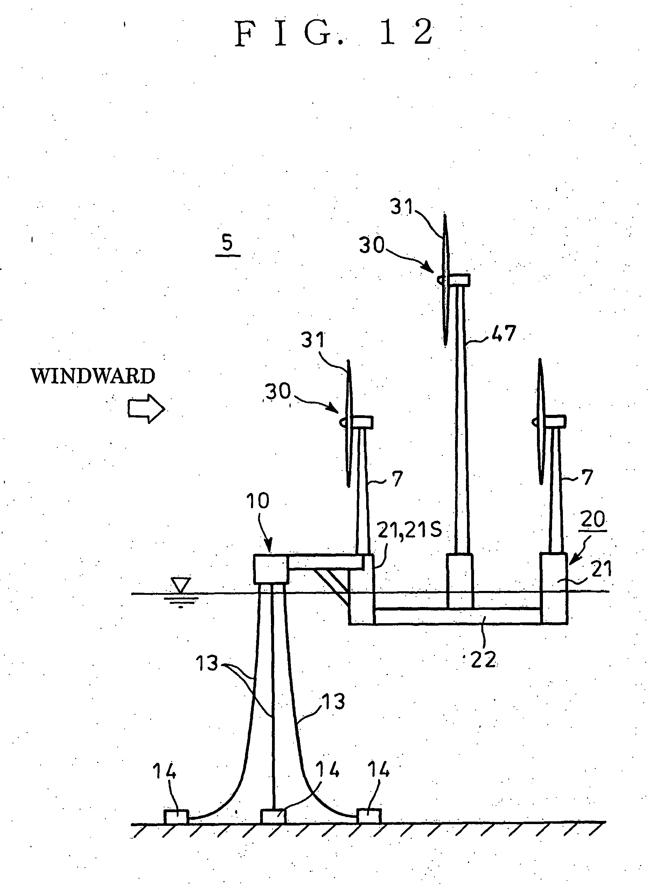

Figs. 11 and 12 show an offshore floating wind power generation plant 5 in which a further wind power generation unit 30 is added to the structure of the float 20 shown in Fig. 1 having three power generation units 30 on the single triangle 23a to thereby have totally four wind power generation units. This offshore floating wind power generation plant 5 has an inner column member 46 disposed inside the triangle 23a via inner connection members 45, a wind power generation unit 30 being mounted on the inner column member 46.

In this case, the wind power generation unit 30 on the column member 21S adjacent to the mooring point 17 is in alignment with that on the inner column member 46 in the direction of the wind; therefore, the latter or rearward wind power generation unit 30 on the inner column member 46 is provided with a longer mast 47 on which a windmill 31 is mounted so as to have height increased in comparison with that of the former or forward wind power generation unit 30 on the column member 21S. This provides arrangement of the rearward wind power generation unit 30 being not affected by any turbulence due to the forward wind power generation unit 30. Alternatively, the forward wind power generation unit 30 may have height increased in comparison with that of the rearward wind power generation unit 30, which is however not preferable since the rearward wind power generation unit 30 may be affected by turbulence due to the mast 7 of the forward wind power generation unit 30.

Such provision of the inner column member 46 inside the triangle 23a and addition of a wind power generation unit 30 on the inner column member 46, as shown in Figs. 11 and 12, may also be applicable to the triangle 23a and the reversed triangle 23b of the floats 20 shown in Figs. 1, 7 and 9.

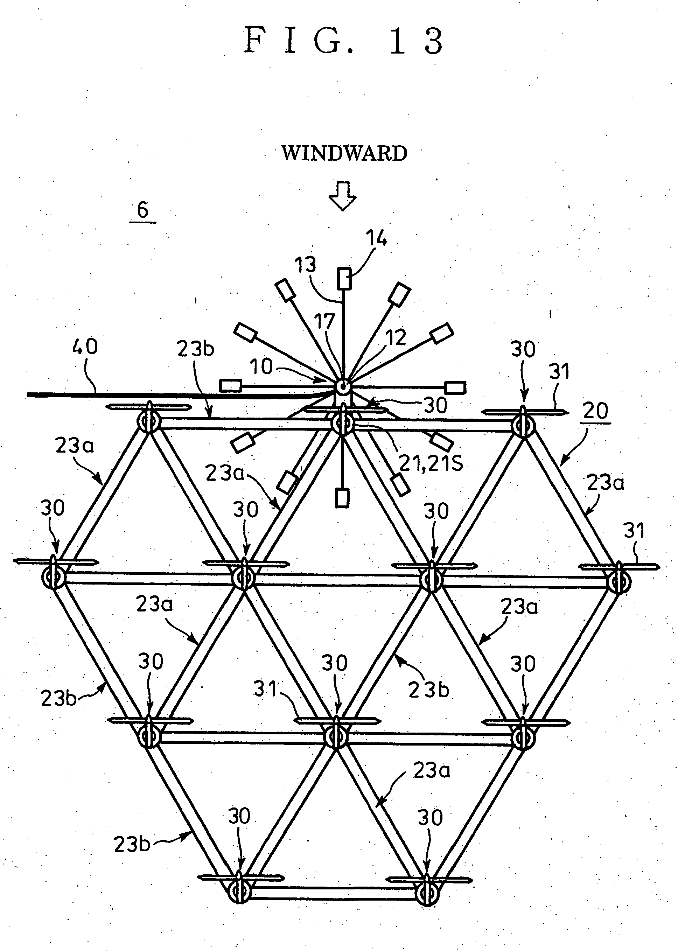

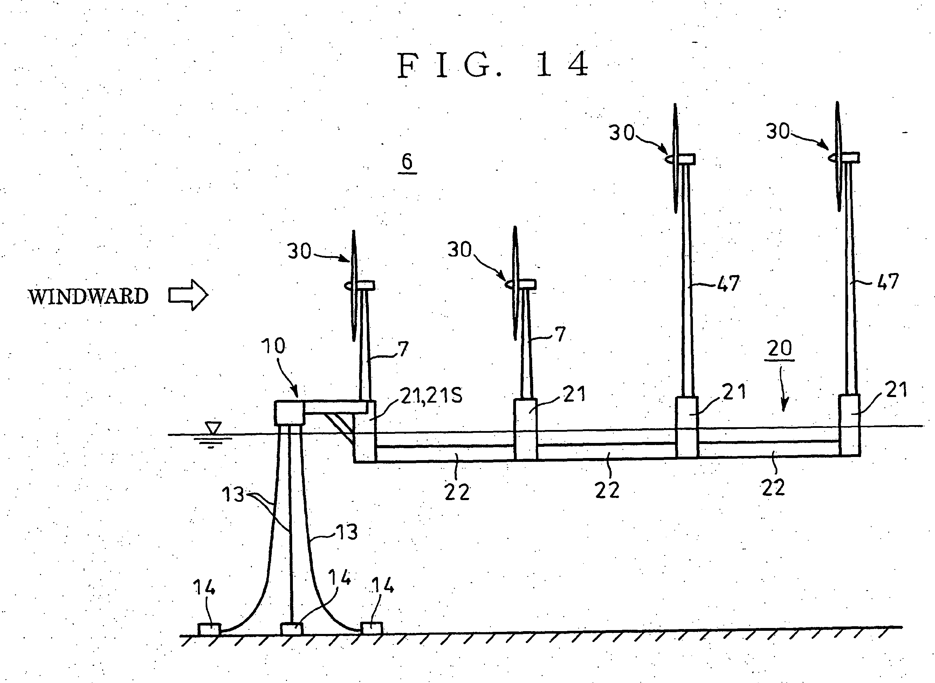

Figs. 13 and 14 show an offshore floating wind power generation plant 6 in accordance with the invention in which the float 20 shown in Fig. 9 is expanded backward so as to have twelve wind power generation units 30 thereon. This offshore floating wind power generation plant 6 has the float 20 assembled such that a reversed triangle 23b and a triangle 23a are disposed backward of the triangle 23a and the reversed triangle 23b, respectively, for longitudinal succession as well as for lateral expansion. Though the float 20 may be expanded to any size, it is preferable that the float 20 be expanded so as to be bilaterally symmetrical with respect to the column member 21S moored to the single point mooring system 10, i.e., the mooring point 17. Such expansion of the float 20 allows a great number of wind power generation units 30 thereon, thereby extensively increasing an amount of electricity to be generated.

The expanded float 20 as shown in Figs. 13 and 14 has the wind power generation units 30 on the column members 21 some of which may be positioned in alignment with each other in the direction of the wind. To overcome this, the rearward one of the wind power generation units 30 in alignment with each other has a longer mast 47 on which a windmill 31 is mounted so as to have height higher than the forward wind power generation unit 30. This provides the rearward wind power generation unit 30 being arranged not to be affected by any turbulence due to the forward wind power generation unit 30.

According to any of the offshore floating wind power generation plants 1' through 6 described above in detail, a semi-submersible float is composed in the form of at least one triangle 23a comprising column and connection members 21 and 22, a wind power generation unit 30 being mounted on each of the column members 21 at the apexes of the float 20, one 21S of the column members of the float 20 being moored horizontally rotatably to a single point mooring system 10 anchored to a sea floor. As a result, a plurality of wind power generation units 30 can be rationally disposed on the float 20 at such spacing from one another that any turbulences due to themselves never interfere with each other and the float 20 can be always kept in a constant orientation to the wind, thereby attaining compactness of the float 20 in size and generation of electricity with high efficiency.

The fact that the float 20 has the column members 21 crossing the water surface and is semi-submersible suppresses fluctuation of the float 20 caused by wave motions and enhances its stability in waves.

The float 20, which has simplified construction with a fundamental structure being the triangle 23a, is excellent in strength and structure and may be easily expanded laterally and longitudinally so as to increase the number of the wind power generation units 30 thereon, thereby readily increasing an amount of electricity to be generated. The expanded float 20, which take the form of trusses in plane, increases its stability as well as its strength.

As to wind power generation units 30 in alignment with each other in the direction of the wind, the rearward one of the power generation units 30 is set to have height higher than the forward one so that former is prevented from being affected by any turbulence due to the latter.

### INDUSTRIAL APPLICABILITY

In an offshore floating wind power generation plant with wind power generation units on a float floated offshore, a float with a triangle as a fundamental structure is moored to a single point mooring system. As a result, float can be kept in a constant orientation to the wind; the wind power generation units can be rationally disposed on the float to generate electricity with high efficiency by the wind power generation units; the float can be kept stable in waves; and the float can be readily expanded to change of an amount of electricity to be generated through increase in number of the wind power generation units.

## Claims

1. An offshore floating wind power generation plant comprising a wind power generation unit (30), a float (20) supporting the wind power generation unit (30) and a single point mooring system (10), **characterised in that** the float (20) comprises three semi-submersible column members (21) and three connection members (22) connecting the column members (21) together and arranged in a plane in the form of a triangle having the column members (21) at its apexes and that one of the column members (21) is adapted to be moored to the single point mooring system (10).

2. A plant as claimed in Claim 1, **characterised in that** the triangle is an equilateral triangle.

3. A plant as claimed in Claim 1, **characterised in that** a wind power generation unit (30) is mounted on each of the column members (21) of the float.

4. A plant as claimed in any one of Claims 1 to 3, **characterised in that** the or each power generation unit (30) includes a windmill (31) and an automatic directional adjustment mechanism for directing the windmill against the wind.

5. A plant as claimed in Claim 3, **characterised in that** an inner column member (46) is disposed inside the triangle and is connected to each of the connection members (22) via respective inner connection members (45), a further wind power generation unit (30) being mounted on the inner column member (46), the further wind power generation unit (30) being substantially equidistant from the two column members (21) which are not adapted to be moored to the single point mooring system (10) and being higher than the wind power generation unit (30) on the column member (21) which is adapted to be moored to the single point mooring system (10).

6. A plant as claimed in any one of Claims 1 to 4, **characterised in that** the float (20) includes a plurality of additional column members (21), all of the column members (21) being arranged in one or more parallel lines of contiguous triangles, the triangles of the or each line being of alternating orientation, the three column members (21) of each triangle being connected together by connecting members (22), each two adjacent triangles in a line including a common connecting member (22).

7. A plant as claimed in Claim 6, **characterised in that** the column members (21) are arranged in two or more contiguous parallel lines of triangles, each contiguous pair of triangles in different lines including a common connecting member (22) and being of opposite orientation.

8. A plant as claimed in Claims 3 and 6, **characterised in that** each wind power generation unit (30), which is mounted on a column member (21) which does not form part of a triangle situated in the line of triangles in which the column member (21) adapted for connection to the single point mooring system (10) is situated, is situated substantially on a line extending through a forward column member (21) forming part of a triangle situated in a line of triangles which is closer to the column member (21) adapted for connection to the single point mooring system (10) perpendicular to the length of the lines of triangles, is higher than the wind power generation unit (30) mounted on the forward column member (21).

9. A plant as claimed in Claims 6, 7 or 8, **characterised in that** the float (20) is symmetrical about a line extending transverse to the length of the line(s) of triangles through the column member (21) adapted to be moored to the single point mooring system (10).

10. A plant as claimed in any one of the preceding claims, **characterised in that** the connection members (22) are in the form of hollow pipes.

11. A plant as claimed in any one of Claims 1 to 9, **characterised in that** the connection members (22) are in the form of trusses.

## Patentansprüche

1. Schwimmende Offshore-Windkraftanlage, umfassend eine Windstromerzeugungseinheit (30), einen Schwimmkörper (20), der die Windstromerzeugungseinheit (30) trägt, und ein Einpunkt-Verankerungssystem (10), **dadurch gekennzeichnet, dass** der Schwimmkörper (20) drei halbuntertauchbare Säulenglieder (21) und drei Verbindungsglieder (22), welche die Säulenglieder (21) miteinander verbinden und in einer Ebene in Form eines Dreiecks angeordnet sind, wobei die Säulenglieder (21) an dessen Ecken angeordnet sind, umfasst und dass eines der Säulenglieder (21) ausgebildet ist, um an dem Einpunkt-Verankerungssystem (10) verankert zu werden.

2. Anlage nach Anspruch 1, **dadurch gekennzeichnet, dass** das Dreieck ein gleichseitiges Dreieck ist.

3. Anlage nach Anspruch 1, **dadurch gekennzeichnet, dass** an jedem der Säulenglieder (21) des Schwimmkörpers eine Windstromerzeugungseinheit (30) angebracht ist.

4. Anlage nach einem beliebigen der Ansprüche 1 bis 3, **dadurch gekennzeichnet, dass** die oder jede Windstromerzeugungseinheit (30) ein Windrad (31) und einen automatischen Richtungseinstellmechanismus zum Ausrichten des Windrades gegen den Wind umfasst.

5. Anlage nach Anspruch 3, **dadurch gekennzeichnet, dass** ein inneres Säulenglied (46) innerhalb des Dreiecks angeordnet ist und mit jedem der Verbindungsglieder (22) über jeweilige innere Verbindungsglieder (45) verbunden ist, wobei eine weitere Windstromerzeugungseinheit (30) an dem inneren Säulenglied (46) angebracht ist, wobei die weitere Windstromerzeugungseinheit (30) von den beiden Säulengliedern (21), die nicht ausgebildet sind, um an dem Einpunkt-Verankerungssystem (10) verankert zu werden, in einem im Wesentlichen gleichen Abstand angeordnet ist und höher als die Windstromerzeugungseinheit (30) an dem Säulenglied (21) ist, welches ausgebildet ist, um an dem Einpunkt-Verankerungssystem (10) verankert zu werden.

6. Anlage nach einem beliebigen der Ansprüche 1 bis 4, **dadurch gekennzeichnet, dass** der Schwimmkörper (20) eine Mehrzahl von zusätzlichen Säulengliedern (21) aufweist, wobei alle Säulenglieder (21) in einer oder mehreren parallelen Linien von angrenzenden Dreiecken angeordnet sind, wobei die Dreiecke der oder jeder Linie von alternierender Ausrichtung sind, wobei die drei Säulenglieder (21) jedes Dreiecks durch Verbindungsglieder (22) miteinander verbunden sind, wobei jeweils zwei aneinander angrenzende Dreiecke in einer Linie ein gemeinsames Verbindungsglied (22) umfassen.

7. Anlage nach Anspruch 6, **dadurch gekennzeichnet, dass** die Säulenglieder (21) in zwei oder mehr angrenzenden parallelen Linien von Dreiecken angeordnet sind, wobei jedes angrenzende Paar von Dreiecken in verschiedenen Linien ein gemeinsames Verbindungsglied (22) umfasst und eine entgegengesetzte Ausrichtung aufweist.

8. Anlage nach Anspruch 3 und 6, **dadurch gekennzeichnet, dass** jede Windstromerzeugungseinheit (30), die an einem Säulenglied (21) angebracht ist, welches keinen Teil eines Dreiecks darstellt, das in der Linie von Dreiecken angeordnet ist, in welcher das Säulenglied (21) angeordnet ist, das zur Verbindung mit dem Einpunkt-Verankerungssystem (10) ausgebildet ist, im Wesentlichen auf einer Linie angeordnet ist, die sich durch ein vorderes Säulenglied (21) erstreckt, welches einen Teil eines Dreiecks bildet, das in einer Linie von Dreiecken angeordnet ist, die näher bei dem Säulenglied (21) liegt, das zur Verbindung mit dem Einpunkt-Verankerungssystem (10) ausgebildet ist, senkrecht zu der Länge der Linien aus Dreiecken, höher ist als die Windstromerzeugungseinheit (30), die an dem vorderen Säulenglied (21) angebracht ist.

9. Anlage nach Anspruch 6, 7 oder 8, **dadurch gekennzeichnet, dass** der Schwimmkörper (20) um eine Linie symmetrisch ist, die sich quer zu der Länge der Linie(n) aus Dreiecken durch das Säulenglied (21), das ausgebildet ist, um an dem Einpunkt-Verankerungssystem (10) verankert zu werden, erstreckt.

10. Anlage nach einem beliebigen der vorangehenden Ansprüche, **dadurch gekennzeichnet, dass** die Verbindungsglieder (22) in Form von hohlen Rohren vorliegen.

11. Anlage nach einem beliebigen der Ansprüche 1 bis 9, **dadurch gekennzeichnet, dass** die Verbindungsglieder (22) in Form von Fachwerksträgern vorliegen.

## Revendications

1. Installation flottante en mer de production d'énergie éolienne comprenant une unité de génération d'énergie éolienne (30), un flotteur (20) supportant l'unité de génération d'énergie éolienne (30) et un organe d'amarrage à point unique (10), **caractérisée en ce que** le flotteur (20) comprend trois éléments colonne semi-submersibles (21) et trois éléments de raccordement (22) raccordant les éléments colonnes (21) ensemble et disposés dans un plan en forme de triangle ayant les éléments colonnes (21) à ses sommets et **en ce que** l'un des éléments colonnes (21) est adapté pour être amarré à l'organe d'amarrage à point unique (10).

2. Installation selon la revendication 1, **caractérisée en ce que** le triangle est un triangle équilatéral.

3. Installation selon la revendication 1, **caractérisée en ce qu'**une unité de génération d'énergie éolienne (30) est montée sur chacun des éléments colonnes (21) du flotteur.

4. Installation selon l'une quelconque des revendications 1 à 3, **caractérisée en ce que** la ou chaque unité de génération d'énergie éolienne (30) comprend une éolienne (31) et un mécanisme d'ajustement directionnel automatique pour diriger l'éolienne face au vent.

5. Installation selon la revendication 3, **caractérisée en ce qu'**un élément colonne intérieur (46) est disposé à l'intérieur du triangle et est raccordé à chacun des éléments de raccordement (22) via des éléments de raccordement respectifs (45), une unité de génération d'énergie éolienne (30) supplémentaire étant montée sur l'élément colonne intérieur (46), l'unité de génération d'énergie éolienne supplémentaire (30) étant essentiellement équidistante des deux éléments colonnes (21) qui ne sont pas adaptés pour être amarrés à l'organe d'amarrage à point unique (10) et étant plus haute que l'unité de génération d'énergie éolienne (30) sur l'élément colonne (21) qui est adapté pour être amarré à l'organe d'amarrage à point unique (10).

6. Installation selon l'une quelconque des revendications 1 à 4, **caractérisée en ce que** le flotteur (20) inclut une pluralité d'éléments colonnes additionnels (21), tous les éléments colonnes (21) étant disposés sur une ou plusieurs lignes parallèles de triangles contigus, les triangles de la ou de chaque ligne étant d'une orientation alternée, les trois éléments colonnes de chaque triangle étant raccordés ensemble par des éléments de raccordement (22), chaque paire de triangles adjacents dans une ligne incluant un élément de raccordement commun (22).

7. Installation selon la revendication 6, **caractérisée en ce que** les éléments colonnes (21) sont disposés sur deux lignes parallèles ou plus de triangles contigus, chaque paire de triangles contigus dans des lignes différentes incluant un élément de raccordement commun (22) et étant d'une orientation opposée.

8. Installation selon les revendications 3 et 6, **caractérisée en ce que** chaque unité de génération d'énergie éolienne (30), qui est montée sur un élément colonne (21) qui ne fait pas partie d'un triangle situé dans la ligne de triangles dans laquelle l'élément colonne (21) adapté pour raccordement à l'organe d'amarrage à point unique (10) est situé, est situé essentiellement sur une ligne se prolongeant en passant par un élément colonne avant (21) faisant partie d'un triangle situé dans une ligne de triangles qui est plus proche de l'élément colonne (21) adapté au raccordement à l'organe d'amarrage à point unique (10) perpendiculaire à la longueur des lignes de triangles, est plus haute que l'unité de génération d'énergie éolienne (30) montée sur l'élément colonne avant (21).

9. Installation selon les revendications 6, 7, ou 8, **caractérisée en ce que** le flotteur (20) est symétrique par rapport à une ligne s'étendant transversalement à la longueur de la (des) ligne(s) de triangles passant par l'élément colonne (21) adapté pour être amarré à l'organe d'amarrage à point unique (10).

10. Installation selon l'une quelconque des revendications précédentes, **caractérisée en ce que** les éléments de raccordement (22) sont en forme de tubes creux.

11. Installation selon l'une quelconque des revendications 1 à 9, **caractérisée en ce que** les éléments de raccordement (22) sont en forme de fermes.
